(19) Europäisches Patentamt / European Patent Office / Office européen des brevets

(11) **EP 2 075 125 A1**

(12) **EUROPEAN PATENT APPLICATION**

(43) Date of publication:
**01.07.2009 Bulletin 2009/27**

(51) Int Cl.:
*B32B 27/32* (2006.01)  *B65D 65/40* (2006.01)
*B32B 37/06* (2006.01)

(21) Application number: **07024680.6**

(22) Date of filing: **19.12.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS**<br><br>(71) Applicant: **TOTAL PETROCHEMICALS RESEARCH FELUY**<br>**7181 Seneffe (Feluy) (BE)** | (72) Inventor: **Charlier, Pascal**<br>**1080 Evere (BE)**<br><br>(74) Representative: **Leyder, Francis**<br>**Total Petrochemicals Research Feluy**<br>**Zone Industrielle C**<br>**7181 Seneffe (Feluy) (BE)** |

(54) **Corona treated polyethylene films**

(57)    The present invention relates to a method for obtaining a heat seal between two metallocene catalysed polyethylene surfaces, at least one of which being corona treated.

**Description**

The present invention relates to a method for obtaining a heat seal between two polyethylene surfaces, at least one of which being corona treated.

Polyethylene is a thermoplastic commodity widely used in consumer products. While its mechanical, chemical and processing properties make it the material of choice in a wide range of applications, its chemical inertness and low surface energy pose problems in applications that require printing, coating, bonding or adhesion with other substrates. This is especially the case for example in packaging applications when information regarding contents must be conveyed or surface decoration is required for aesthetic reasons. For these applications it is therefore necessary to subject the polyethylene to a surface-modifying treatment that increases the surface energy.

The most common method to increase the surface energy of a plastic surface is corona treatment, also known as corona discharge treatment. During the corona treatment, the film passes through a highly charged electrical field that bombards the surface of the film in the presence of oxygen. This bombardment converts the oxygen into ozone, which oxidizes the surface of the film, creating sites for anchorage of adhesives, inks or coatings. The corona treatment is usually performed at a point within the take up section of a blown or a cast film production prior to the steps of printing or coating the film.

A drawback of corona treatment is that the treatment affects the seal strength of the treated surface of the film. This is observed when an attempt is made either to heat seal two corona treated surfaces or to seal the treated side to itself as in a pouch. This is also the case if an attempt is made to seal the treated surface to an untreated surface. In each case, even if a seal is formed, the seal is too weak. The seal tends to break if the film surface is used as a sealable surface for example in the production of bags or heavy-duty sacks and the like.

It is an object of the present invention to enhance the seal strength between two polyethylene surfaces, at least one of which polyethylene surfaces being corona treated.

The term "heat sealing" as used herein refers to the technique of sealing by heat and pressure together.

The term "polyethylene surface" as used herein refers either to the surface of a monolayer film or to the surface layer of a multilayer film wherein said surface is a polyethylene.

The present invention provides a method for obtaining a heat seal between two polyethylene surfaces, the method comprising the steps of:

a) providing a first polyethylene surface, wherein the polyethylene is produced with a metallocene catalyst,
b) providing a second polyethylene surface, wherein the polyethylene is produced with a metallocene catalyst,
c) corona treating at least one of the polyethylene surfaces and
d) heat sealing the first polyethylene surface and the second polyethylene surface together.

Preferably, the metallocene catalysed polyethylene used in the present invention is produced with a metallocene having the general formula

$$R\,(THI)_2\,MQ_{Z-2}$$

wherein

THI is a tetrahydrogenated indenyl group which may be substituted or not,
R is a substituted or unsubstituted $C_1$-$C_4$ alkylidene radical, a dialkyl germanium, a dialkyl silicon, a diaryl silicon, a dialkoxysilane, a diphenoxysilane, or an alkyl phosphine or amine radical bridging two tetrahydrogenated indenyl groups,
Q is a hydrocarbyl radical such as aryl, alkyl, alkenyl, alkylaryl, or arylalkyl radical having from 1-20 carbon atoms, hydrocarboxy radical having 1-20 carbon atoms or halogen and can be the same or different from each other,
M is a group IVb, Vb or VIb transition metal, and
Z is the valence of the transition metal.

Preferably, THI is an unsubstituted tetrahydrogenated indenyl group.
Preferably, M is a group IVb transition metal, more preferably M is zirconium.
Preferably, Q is an alkyl radical having from 1-4 carbon atoms or a halogen, more preferably Q is methyl or chlorine.
Preferably, R is a substituted or unsubstituted $C_1$-$C_4$ alkylidene radical, more preferably ethylidene or isopropylidene.
Preferably, the metallocene catalyst used is a bridged bis (tetrahydro-indenyl) zirconium dichloride, more preferably ethylene bis (tetrahydro-indenyl) zirconium dichloride.

The melt index of the metallocene catalysed polyethylene can be regulated by the amount of hydrogen injected in the reactor. The melt index ($MI_2$) of the polyethylene ranges from 0.2 g/10 min to 10 g/10 min when measured according to ASTM D 1238, conditions 190°C/2.16 kg.

The metallocene catalysed polyethylene may have a density of at least 0.900 g/cm³, preferably of at least 0.918 glcm³, more preferably of at least 0.923 g/cm³. It has a density of at most 0.965 g/cm³, preferably of at most 0.960 g/cm³, more preferably of at most 0.950 g/cm³, even more preferably of at most 0.940 g/cm³. The density is measured at 23°C following the method described in ASTM D 1505.

As known in the art, the desired density is obtained by copolymerisation of ethylene with a suitable amount of a comonomer selected from the group consisting of propylene, 1-butene, 1-hexene, 1-octene and 4-methyl-1-pentene, the preferred comonomer being 1-butene, 1-hexene, 1-octene, the most preferable comonomer being 1-hexene.

The metallocene catalysed polyethylene may have a monomodal molecular weight distribution. The molecular weight distribution is defined by a parameter, known as the dispersion index (D), which is the ratio between the average molecular weight by weight (Mw) and the average molecular weight by number (Mn). Preferably, the metallocene catalysed polyethylene used in the present invention has a molecular weight distribution of less than 4, preferably between 2 and 3, more preferably between 2.2 to 2.7. The molecular weights are determined by gel permeation chromatography (GPC).

The metallocene catalysed polyethylene is also characterised by a long chain branching structure. Preferably, the mPE resin used in the present invention has a rheological long -chain branching index, LCBI, such as defined by R.N. Shroff and H. Mavridis in Macromolecules 2001, 34, 7362-7367 by the equation:

$$LCBI = \frac{\eta_0^{0.179}}{4.8\,[\eta]} - 1$$

where $\eta_0$ is the limiting, zero-shear viscosity at 190°C and $[\eta]$ is the intrinsic viscosity in trichlorobenzene at 135°C. The LCBI is calculated from the best fitting by least squares analysis of the rheological curve (complex viscosity versus frequency) as described in US-A-6114486 with the following generalized Cross equation, i.e. $\eta = \eta_0 / (1 + (\gamma\,t_0)^n)$ wherein n is the power law index of the material characterizing the shear thinning behaviour of the material, $t_0$ is the characteristic relaxation time of the material, $\eta_0$ is the zero-shear viscosity, $\eta$ and $\gamma$ are the measured viscosity and shear rate data respectively. The dynamic rheological analysis is performed at 190°C under nitrogen and the strain amplitude is 10%. Results are reported according to ASTM D 4440.

Preferably, the LCBI of the metallocene catalysed polyethylene used in the present invention is at least 0.14, more preferably at least 0.50, even more preferably at least 1, most preferably at least 2.

Corona treatment of polymer film surfaces is well known. It is an electrical process that uses ionized air to increase the surface energy of plastic surface in order to allow improved wettability and adhesion of inks, coatings and adhesives. The treated surface demonstrates improved printing and coating quality. Usually, corona treatment is carried out such as to provide a surface tension of 35 to 50 mN/m.

According to one embodiment, only one metallocene catalysed polyethylene surface is corona treated.

According to another embodiment, both metallocene catalysed polyethylene surfaces are corona treated.

According to one embodiment, the corona treated polyethylene surface is the surface of a monolayer film.

According to another embodiment, the corona treated polyethylene surface is the surface layer of a multilayer film, the surface layer having been corona treated on its upper side. By multilayer film, it is meant a film having from 2 to 7 layers or even more. For example, the film may have a three-layer structure A/C/A wherein "A" may be either of the same composition or may be of different composition provided that when "A" is corona treated, then "A" is a metallocene catalysed polyethylene. The core layer C can be either a tie layer such as for example a layer of ethylene vinyl acetate or can be any polyolefins such as polyethylene, polypropylene or mixture thereof. One can cite for example a high density polyethylene resin which imparts the stiffness to the film. One or more inner layers may also be present between layers A and C. One can cite for example a gas barrier layer containing for example ethylene vinyl alcohol (EVOH). The multilayer structure may also include a laminate. The multilayer film is made by coextruding the resins of the different layers. Preferably, the multilayer film is produced by a coextrusion blown film process.

In the present invention, the sealing occurs between two polyethylene surfaces, the polyethylene of each surface being produced with a metallocene catalyst and at least one surface is corona treated. Preferably both polyethylene surfaces are metallocene catalysed polyethylene such as previously defined.

The polyethylene surface, which is not corona treated and to which the corona treated polyethylene is sealed to, may be the polyethylene surface of either a monolayer or a multilayer film.

The sealing temperature of the polyethylene surfaces may range from 120°C to 160°C.

The present invention further provides a packaging comprising a heat seal obtained by the method of the invention. As packaging, one can cite for example bags or heavy-duty sacks.

According to one embodiment, the heat seal occurs between the polyethylene surfaces of two films.

According to another embodiment, a film is first folded over itself and the corona treated polyethylene surface is either sealed to itself or sealed to the backside surface of the film, provided that the backside surface of the film is made of a metallocene catalysed polyethylene.

The present invention also provides the use of a corona treated polyethylene as a heat sealing surface to a second polyethylene surface characterised in that both polyethylenes are metallocene catalysed polyethylenes, preferably both polyethylenes being produced with the metallocene catalyst having the general formula

$$R(THI)_2 MQ_{Z-2}$$

wherein THI, R, Q, M and Z have the meaning stated above.

Example

1. Materials

The following resins were used:

* A metallocene polyethylene resin was prepared by using ethylene bis (4,5,6,7,tetrahydro-1-indenyl) zirconium dichloride. Said catalyst was activated and supported. The resin had a density of 0.923 g/cm$^3$, a MI$_2$ of 0.9 g/10min, a molecular weight distribution of 2, a long chain branching index (LCBI) of 0.60 and a surface tension of 32 mN/m. The resin was used

- on one hand as such and identified hereinafter "M" and
- on the other hand previously corona treated on one side and identified hereinafter "Mc". The surface tension of the corona treated resin was 40 mN/m.

* A commercially available low-density polyethylene produced by a high pressure polymerisation process sold by Total Petrochemicals having a density of 0.924 glcm$^3$, a MI$_2$ of 0.8 g/10min. a molecular weight distribution of 5.6 and a surface tension of 30 mN/m known under the reference 1008FE24. The resin was used:

- on one hand as such and identified "L" and
- on the other hand previously corona treated on one side and identified hereinafter "Lc". The surface tension of the corona treated resin was 36 mN/m.

* A commercially available high-density polyethylene sold by Total Petrochemicals under the reference HL717 having a density of 0.958 g/cm$^3$, a MI$_2$ of 0.26 g/10min, a molecular weight distribution of 12 and a long chain branching index (LCBI) of 0.4.

2. Films preparation

Four blown coextruded three-layers A/B/A films (F1-F4) were prepared and characterised by

- either two identical surface layers (A) made of "M" (F2) and "L" (F4) or two different surface layers, one made of "Mc" and the other one made of "M" (F1) or one made of "Lc" and the other one made of "L" (F3),
- one core layer (B) made of HL717.

The thickness of each layer A is 10$\mu$m. The thickness of layer B is 20$\mu$m.

The following films were thus produced:

F1: Mc/HL717/M,
F2: M/HL717/M,
F3: Lc/HL717/L and
F4: L/HL717/L.

3. Films sealing

Films 150 mm long and 100 mm wide were heat sealed to each other during 2.5 seconds at a pressure of 40 N at different temperature, by steps of 10°C. The films were maintained during 40 hours at 23°C, 50% humidity. The seal strength was measured on a 15 mm width sample at 200 mm/min according to the ASTM F88-00 method.

4. Examples and comparative examples

Example 1: the corona treated polyethylene surface of the film F1, wherein the polyethylene is produced with a metallocene catalyst, was heat sealed to the metallocene catalysed polyethylene surface of the film F2 (example identified hereafter as Mc/M).

Comparative example 1: the corona treated polyethylene surface of the film F1, wherein the polyethylene is produced with a metallocene catalyst, was heat sealed to the low density polyethylene surface of the film F4 (comparative example identified hereafter as Mc/L).

Comparative example 2: the corona treated low density polyethylene surface of the film F3 was heat sealed to the metallocene catalysed polyethylene surface of the film F2 (comparative example identified hereafter as Lc/M).

Comparative example 3: the corona treated low density polyethylene surface of the film F3 was heat sealed to the low density polyethylene surface of the film F4 (comparative example identified hereafter as Lc/L).

Example 2: the corona treated polyethylene surface of the film F1, wherein the polyethylene is produced with a metallocene catalyst, was heat sealed to itself (example identified hereafter as Mc/Mc).

Comparative example 4: the corona treated low density polyethylene surface of the film F3 was heat sealed to the corona treated metallocene catalysed polyethylene surface of the film F1 (comparative example identified hereafter as Lc/Mc).

Comparative example 5: the corona treated low density polyethylene surface of the film F3 was heat sealed to itself (comparative example identified as Lc/Lc).

5. Film properties

The seal strength between the sealant surfaces was measured by the force (in Newtons) necessary for separating those surfaces. The results of tables I and II have been respectively plotted in figures I and II.

Table 1

| | Seal strength (N) | | | |
|---|---|---|---|---|
| | Example 1 (Mc/M) | Comparative example 1 (Mc/L) | Comparative example 2 (Lc/M) | Comparative example 3 (Lc/L) |
| Sealing temperature (°C) | | | | |
| 120 | 14.6 | 9.1 | 9.2 | 9.2 |
| 130 | 15.0 | 12.4 | 12.8 | 11.5 |
| 140 | 14.9 | 12.1 | 12.4 | 11.9 |
| 150 | 15.2 | 12.5 | 12.4 | 12.7 |
| 160 | 16.2 | 12.5 | 12.5 | 13.3 |

Table 2

| | Seal strength (N) | | |
|---|---|---|---|
| | Example 2 (Mc/Mc) | Comparative example 4 (Lc/Mc) | Comparative example 5 (Lc/Lc) |
| Sealing temperature (°C) | | | |
| 120 | 12.5 | 8.9 | 8.9 |

(continued)

| | Seal strength (N) | | |
|---|---|---|---|
| | Example 2 (Mc/Mc) | Comparative example 4 (Lc/Mc) | Comparative example 5 (Lc/Lc) |
| Sealing temperature (°C) | | | |
| 130 | 13.6 | 12.3 | 11.1 |
| 140 | 13.9 | 12.6 | 11.8 |
| 150 | 14.4 | 12.9 | 11.9 |
| 160 | 14.1 | 12.7 | 12.3 |

**Claims**

1.  A method for obtaining a heat seal between two polyethylene surfaces, the method comprising the steps of:

    a) providing a first polyethylene surface, wherein the polyethylene is produced with a metallocene catalyst,
    b) providing a second polyethylene surface, wherein the polyethylene is produced with a metallocene catalyst,
    c) corona treating at least one of the polyethylene surfaces and
    d) heat sealing the first polyethylene surface and the second polyethylene surface together.

2.  A method according to claim 1 wherein the first polyethylene surface and the second polyethylene surface are both corona treated.

3.  A method according to claim 1 or 2 **characterised in that** the corona treated polyethylene surface is produced with a metallocene catalyst having the general formula

    $$R\,(THI)_2\,MQ_{Z-2}$$

    wherein

    THI is a tetrahydrogenated indenyl group which may be substituted or not,
    R is a substituted or unsubstituted $C_1$-$C_4$ alkylidene radical, a dialkyl germanium, a dialkyl silicon, a diaryl silicon, a dialkoxysilane, a diphenoxysilane, or an alkyl phosphine or amine radical bridging two tetrahydrogenated indenyl groups,
    Q is a hydrocarbyl radical such as aryl, alkyl, alkenyl, alkylaryl, or arylalkyl radical having from 1-20 carbon atoms, hydrocarboxy radical having 1-20 carbon atoms or halogen and can be the same or different from each other,
    M is a group IVb, Vb or VIb transition metal, and
    Z is the valence of the transition metal.

4.  A method according to claim 3, wherein THI is an unsubstituted tetrahydrogenated indenyl group.

5.  A method according to claim 3, wherein M is a group IVb transition metal.

6.  A method according to claim 3, wherein M is zirconium.

7.  A method according to claims 1 to 6, wherein the metallocene is a bridged bis (tetrahydro-indenyl) zirconium dichloride.

8.  A method according to claim 1, wherein the polyethylene surface, which is not corona treated is produced with a metallocene catalyst having the general formula mentioned in claim 3.

9.  A packaging comprising a heat seal obtained by the method of any one of the preceding claims.

10. Use of a corona treated polyethylene as a heat sealing surface to a second polyethylene surface **characterised in that** both polyethylenes are metallocene catalysed polyethylenes.

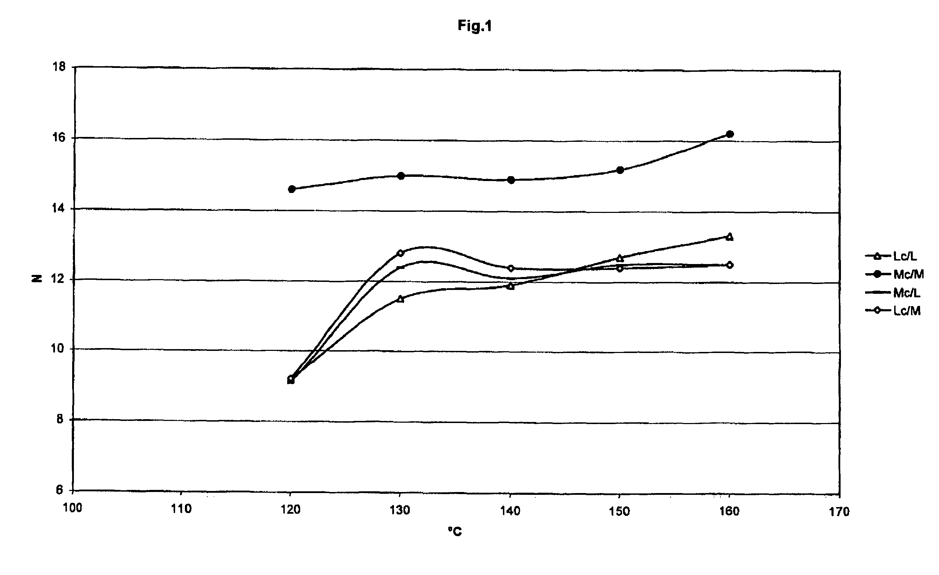

Fig.1

EP 2 075 125 A1

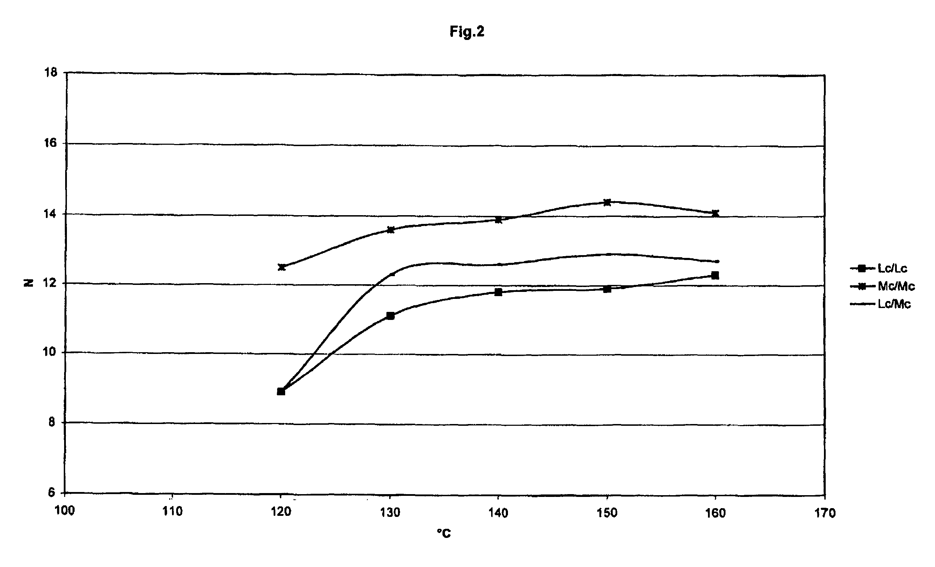

Fig.2

EP 2 075 125 A1

## EUROPEAN SEARCH REPORT

**European Patent Office**

| Application Number |
|---|
| EP 07 02 4680 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 810 992 A (UNIVATION TECH LLC [US]) 25 July 2007 (2007-07-25) | 1,2,10 | INV. B32B27/32 B65D65/40 B32B37/06 |
| Y | * paragraphs [0001], [0016], [0023], [0061], [0125] - [0127]; claims 1,3,18-20 * | 3-9 | |
| X | WO 97/13640 A (GRACE W R & CO [US]) 17 April 1997 (1997-04-17) | 1,2,10 | |
| Y | * page 1, line 10 - line 13; examples 1-9 * <br> * page 17, line 10 - line 13; claims 1,18 * | 3-9 | |
| X | WO 01/03921 A (MOBIL OIL CORP [US]) 18 January 2001 (2001-01-18) | 1,2,10 | |
| Y | * page 1, line 5 - line 9 * <br> * page 4, line 8 - line 30 * <br> * page 6, line 20 - line 25; claims 1-10; examples 1-4 * | 3-9 | |
| Y | EP 1 225 201 A (ATOFINA RES [BE]) 24 July 2002 (2002-07-24) * paragraphs [0001], [0061] - [0066]; claims 1-13 * | 3-8 | **TECHNICAL FIELDS SEARCHED (IPC)** <br><br> B32B <br> B65D |
| Y | EP 1 593 696 A (TOTAL PETROCHEMICALS RES FELUY [BE]) 9 November 2005 (2005-11-09) * paragraphs [0001], [0015] - [0020]; claims 1-11 * | 3-8 | |
| Y | GB 2 040 799 A (BRITISH CELLOPHANE LTD) 3 September 1980 (1980-09-03) * page 1, line 49 - line 56 * <br> * page 5, line 1 - line 4; example 1 * | 9 | |

-/--

The present search report has been drawn up for all claims

| Place of search | Date of completion of the search | Examiner |
|---|---|---|
| Munich | 5 June 2008 | Hindia, Evangelia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 02 4680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 97/44178 A (UNION CAMP CORP [US]) 27 November 1997 (1997-11-27) * page 1, line 4 - line 6 * * page 7, line 7 - page 8, line 10; claims 1-17; examples 1-4 * ----- | 1-10 | |
| | | | **TECHNICAL FIELDS SEARCHED (IPC)** |

The present search report has been drawn up for all claims

| Place of search | Date of completion of the search | Examiner |
|---|---|---|
| Munich | 5 June 2008 | Hindia, Evangelia |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                             
& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 07 02 4680

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2008

| Patent document cited in search report | | | Publication date | Patent family member(s) | | Publication date |
|---|---|---|---|---|---|---|
| EP 1810992 | A | | 25-07-2007 | NONE | | |
| WO 9713640 | A | | 17-04-1997 | AU | 720875 B2 | 15-06-2000 |
| | | | | AU | 7444496 A | 30-04-1997 |
| | | | | BR | 9611097 A | 13-07-1999 |
| | | | | CA | 2234104 A1 | 17-04-1997 |
| | | | | EP | 0871571 A1 | 21-10-1998 |
| | | | | JP | 11513623 T | 24-11-1999 |
| | | | | NZ | 321150 A | 28-02-2000 |
| WO 0103921 | A | | 18-01-2001 | AU | 5916400 A | 30-01-2001 |
| | | | | BR | 0012278 A | 12-03-2002 |
| | | | | CA | 2378274 A1 | 18-01-2001 |
| | | | | EP | 1214195 A1 | 19-06-2002 |
| | | | | JP | 2003504238 T | 04-02-2003 |
| | | | | US | 2002122952 A1 | 05-09-2002 |
| EP 1225201 | A | | 24-07-2002 | AT | 344294 T | 15-11-2006 |
| | | | | DE | 60215772 T2 | 30-08-2007 |
| | | | | WO | 02055601 A1 | 18-07-2002 |
| | | | | ES | 2274002 T3 | 16-05-2007 |
| | | | | JP | 4049674 B2 | 20-02-2008 |
| | | | | JP | 2004517196 T | 10-06-2004 |
| | | | | US | 2005004314 A1 | 06-01-2005 |
| EP 1593696 | A | | 09-11-2005 | NONE | | |
| GB 2040799 | A | | 03-09-1980 | NONE | | |
| WO 9744178 | A | | 27-11-1997 | CA | 2253218 A1 | 27-11-1997 |
| | | | | EP | 0906181 A1 | 07-04-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6114486 A

**Non-patent literature cited in the description**

- **R.N. Shroff ; H. Mavridis.** *Macromolecules,* 2001, vol. 34, 7362-7367